# EUROPEAN PATENT APPLICATION

(11) **EP 4 198 295 A1**
(43) Date of publication of application: **21.06.2023**
(21) Application number: 22020614.8
(22) Date of filing: 16.12.2022
(51) Int. Cl.: F02K 7/02, F02K 7/14, F02K 7/18, F02K 9/48, F02K 9/64, F23R 7/00

(54) **METHOD AND INSTALLATION FOR RAISING THE TEMPERATURE OF ANY ONE OF PROPELLANT COMPONENTS OF A ROCKET UP TO HIGHER TEMPERATURE**

(30) Priority: 16.12.2021 PL 43987121
(71) Applicant: SIEC BADAWCZA LUKASIEWICZ-INSTYTUT LOTNICTWA, 02-256 Warszawa (PL)
(72) Inventor: WOLANSKI, Piotr, 02-765 Warszawa (PL); KAWALEC, Michal, 02-679 Warszawa (PL)
(74) Representative: Malewska, Ewa

(57) **Abstract**

The invention relates to a method of raising the temperature of any of the propellant components of a rocket engine to a higher temperature, in which the stream of a liquid cryogenic component is subjected to initial evaporation and heating by heat received from the products of detonation combustion of the fuel-rich mixture in the detonation chamber, through its walls, and then detonation chamber - in the mixing zone, this partially vaporized stream is gradually and multi-point introduced into the hot stream of rotating detonation products, obtaining a stream of evaporated and heated cryogenic component to feed the engine combustion chamber.

According to the invention, a propellant mixture containing such an excess of fuel is combusted in the detonation chamber that the combustion product stream is at a temperature enabling ignition and after-combustion with liquid oxygen or partially vaporized liquid oxygen supplied downstream of the detonation chamber.

The subject of the invention is also an installation for raising the temperature of any of the propellant components of a rocket engine to a higher temperature, which consists of a chamber (**2**) for initial evaporation of a liquid cryogenic component, concentrically combined with a chamber (**1**) for detonation combustion of mixtures highly enriched in fuel (low in oxidizer), which has a common wall with the chamber (**1**) enabling the flow of heat from the products of rotating detonation to the stream of the liquid component of the propellant mixture and from the mixing zone (**3**) of the partially evaporated cryogenic component with hot products of detonation combustion, in which the heat is gradually reduced to zero. the difference in the diameters of the two concentric spaces (**1, 2**), and the wall separating them is perforated.

## Description

The invention relates to a method and an installation for raising the temperature of any one of propellant components of a rocket engine to a higher temperature, and in particular for evaporating liquid oxygen.

In rocket engines using liquid cryogenic propellants for propulsion, mixtures of liquid hydrogen and liquid oxygen are most often used. Currently, propulsion systems using mixtures of liquid methane and liquid oxygen are being developed [1-4].

Liquid cryogenic rocket engines use hydrogen or methane as liquid fuel to cool the combustion chamber and nozzle. The size of the cooled surfaces is large enough to lead to complete evaporation and preheating of the evaporated coolant, which in engines powered by liquid hydrogen and liquid oxygen is liquid hydrogen, and in engines powered by liquid methane and liquid oxygen it is liquid methane. Evaporated and pre-heated hydrogen (or methane) constituting the gaseous fuel, is fed to the combustion chambers (preliminary and main), where it is mixed with oxygen for combustion, i.e. obtaining thermal energy and high-temperature gaseous combustion products. Combustion in the pre-combustion chamber provides energy to drive pumps of liquid propellant components, and in the main chamber hot gaseous combustion products are the working medium of the rocket engine

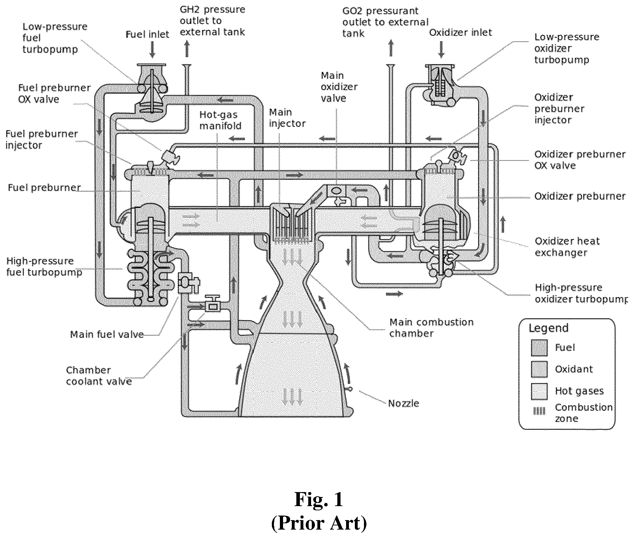

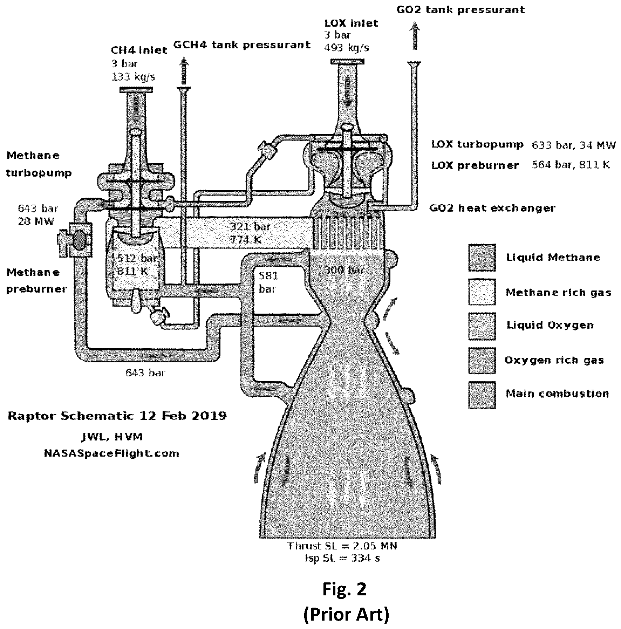

In the currently used and developed engines using cryogenic propellants, liquid oxygen is preheated in special tubes several or even several dozen centimeters long, which are washed in the pre-chambers with gaseous fuel heated during the cooling of engine components: the chamber and the nozzle, and in the main chambers with products of partial combustion from the pre-chambers. Thanks to the combustible mixture prepared in this way, the main combustion chambers of modern cryogenic rocket engines are relatively short and ensure effective combustion of the produced combustible mixture and its combustion [1-3]. Diagrams of such prior art motors are shown in Fig. 1 and Fig. 2.

Fig. 1 shows a diagram of the R-25 engine used to propel the space shuttle "Space Shuttle". This engine is powered by liquid hydrogen and liquid oxygen. In both pre-chambers, combustion of the hydrogen-oxygen mixture enriched in fuel, i.e. hydrogen, was used, while in the main chamber, post-combustion of incomplete combustion products from pre-chambers with oxygen was used. At the inlet to the main chamber, a system of many parallel tubes is mounted, in which liquid oxygen is heated and evaporated [1,5].

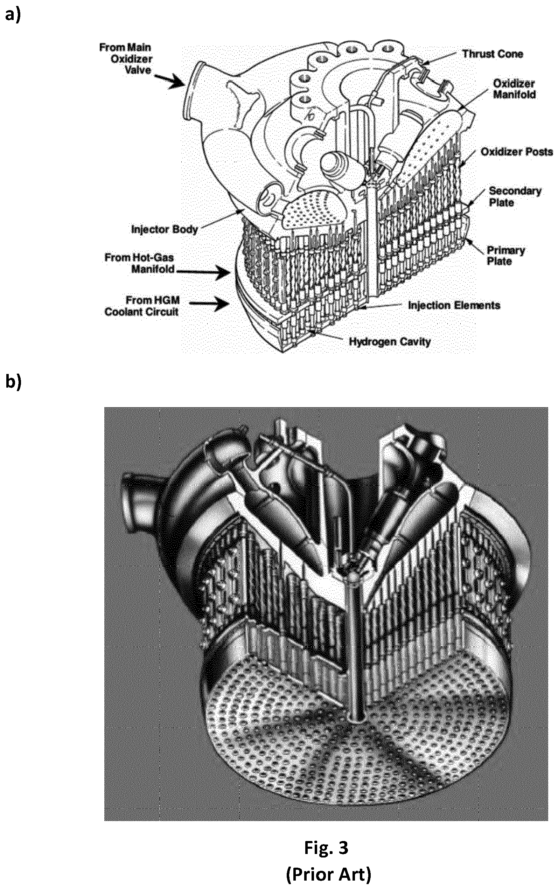

A diagram of the liquid oxygen evaporation system used in the R-25 engines of the Space Shuttle is shown in Fig. 3.

The Raptor engine currently being developed by SpaceX (Fig. 2) uses cryogenic components: liquid methane and liquid oxygen. As seen in the engine diagram, liquid methane is used to cool the combustion chamber and nozzle. During cooling, methane evaporates, which then forms a fuel-rich mixture with oxygen in the pre-chamber, and the products of partial combustion rich in methane are directed to the main chamber, passing through a system of many parallel tubes, through which incompletely burnt products are fed from the second pre-chamber oxygen-enriched mixture. In these tubes, the oxygen-enriched mixture is heated, and after it is mixed with the products of incomplete combustion of methane in the main engine chamber, the mixture is burnt out. The stream of combustion products flowing out through the engine nozzle creates the thrust necessary to propel the rocket.

The diagrams of known cryogenic rocket engines presented in the figure (Fig. 1 - Fig. 3) show that classic oxygen heating systems (e.g. R-25 engine) are used to evaporate liquid oxygen in the existing rocket engines, or - as in the ", developed by "SpaceX", systems for partial, pre-deflagration combustion of an oxygen-rich (methane-poor) mixture of propellants.

In rocket engines powered by liquid oxygen and liquid hydrogen, the mass ratio of oxygen to hydrogen is usually about 6. For this reason, it is difficult to evaporate liquid oxygen by using it to cool the walls of the engine. The same is the case with currently developed engines using liquid methane and liquid oxygen, such as the Raptor engine developed by SpaceX or the LUMEN engine developed by DLR, in which the mass ratio of liquid oxygen to liquid methane is about 3-3.8. And in this case, it is possible to evaporate only liquid methane, which is used to cool the walls of the engine and the nozzle. Partial or complete evaporation of liquid oxygen would require very large cooling surfaces, while rocket engines tend to minimize engine components (especially the combustion chamber and pre-chambers in staged combustion engines).

In order to ensure quick and efficient combustion of both components of the propellant in the chambers of rocket engines, it is necessary to evaporate them and mix them well. In cryogenic rocket engines, the fuel is vaporized and partially heated as it cools the main combustion chamber and engine nozzle, but the oxidizer, liquid oxygen, remains in a near-boiling liquid state (-183 °C (90 K) at normal pressure) . It is therefore necessary to preheat it, and it would be most appropriate to completely vaporize the oxygen before it is injected into the combustion chamber to ensure rapid mixing with the previously vaporized fuel.

In the Polish Patent No. Pat ........ (Application No. P.439009 of September 22, 2021) disclosed is a pre-combustion chamber in liquid propellant rocket engines in which detonation combustion takes place.

It has now surprisingly turned out that this solution makes it possible to improve other aspects of the operation of the rocket engine as well.

The aim of the invention is to provide an efficient method of raising the temperature of any component of the propellant of a rocket engine to a higher temperature and an installation for implementing this method, in particular a system for evaporating and possibly heating liquid oxygen (oxidant in the propellant mixture) and to obtain more favorable combustion conditions compared to the state of the art. propellant mixture.

The method of raising the temperature of any of the propellant components of the rocket engine to a higher temperature, according to the invention, consists in the fact that the stream of the liquid cryogenic component is subjected to initial evaporation and heating by heat received from the products of detonation combustion of the fuel-enriched mixture in the detonation chamber, through its walls , and then downstream of the detonation chamber - in the mixing zone, this partially vaporized stream is gradually and multi-point introduced into the hot stream of rotating detonation products, obtaining a stream of evaporated and heated cryogenic component to feed the engine combustion chamber.

According to the invention, a propellant mixture containing such an excess of fuel is combusted in the detonation chamber that the combustion product stream is at a temperature enabling ignition and post-combustion with liquid oxygen or partially vaporized liquid oxygen supplied after the detonation chamber.

The products of the continuously rotating detonation are obtained in a channel with a circular, elliptical, annular, disc or conical cross-section.

The invention also includes an installation for raising the temperature of any of the propellant components of a rocket engine to a higher temperature, which, according to the invention, consists of a pre-evaporation chamber of a liquid cryogenic component, concentrically combined with a chamber for detonation combustion of highly fuel-enriched (oxidant-poor) mixtures, which has with this chamber, a common wall enabling the flow of heat from the products of the rotating detonation to the stream of the liquid component of the propellant mixture, and from the mixing zone of the partially evaporated cryogenic component with the hot products of detonation combustion, in which the difference in diameters of both concentric spaces is gradually reduced to zero, and the wall separating them is perforated.

This installation is characterized by the fact that the detonation combustion chamber of the fuel-enriched mixture is surrounded by a cylindrical chamber of preliminary vaporization of the liquid oxidant/fuel (hydrogen or methane). The liquid oxidant/fuel pre-vaporization chamber has a decreasing diameter in the mixing zone, and its outer wall is in the form of a side surface of a truncated cone. The inlet to the liquid oxidant/fuel pre-vaporization chamber is located in the annular head below the fuel and oxidant injectors for the detonation combustor.

Alternatively, the inventive plant is characterized in that an annular fuel-rich detonation combustion chamber surrounds a cylindrical liquid oxidant/fuel pre-vaporization chamber. The liquid oxidant/fuel pre-vaporization chamber has a cylindrical inlet having the same diameter as the diameter of the cylindrical chamber. The liquid oxidant/fuel pre-evaporation chamber in the mixing zone has the shape of an expanding cup, with a diameter gradually increasing up to the value corresponding to the internal diameter of the outer wall of the detonation combustion chamber. The fuel and oxygen injectors for the detonation combustor are located in the base of the annular detonation combustor.

The installation according to the invention for evaporating and/or possibly heating the liquid oxidant/fuel - as a component of the propellant mixture of the rocket engine, is additionally characterized by the fact that the detonation combustion chamber of the fuel-rich mixture is a cylindrical, annular, disc or conical chamber.

The advantage of the solution according to the invention is the use of the products of the continuously rotating detonation to vaporize the liquid cryogenic component, especially oxygen, or to heat the previously evaporated liquid cryogenic component with other gaseous impurities.

Rotating detonation products used in the method according to the invention to evaporate/heat the liquid component of the cryogenic propellant mixture, especially oxygen, the products resulting from the combustion of the fuel-rich mixture contain in their composition an excess of gaseous fuel, high enough to the products of its evaporation to produce gaseous oxygen in a mixture with detonation products and afterburning products of oxygen with fuel (with steam). The amount of fuel in the detonation products should be sufficient to generate such an amount of heat during post-combustion with oxygen to achieve the assumed final temperature of the stream of evaporated cryogenic component, especially oxygen, possibly in a mixture with detonation products.

The solution according to the invention can be used with any spatial configuration of the detonation combustion chamber.

The invention is explained in more detail below with reference to the drawing in which:
- Fig. 1: illustrates the state of the art and shows a diagram of the R-25 engine used in the Space Shuttle (SSME).
- Fig. 2: also illustrates the state of the art and shows a diagram of the "Raptor" engine in which two pre-chambers are used: one combusting a fuel-rich (in this case methane) combustible mixture and the other burning a mixture rich in oxidizer (oxygen).
- Fig. 3: shows the known injection system of the Space Shuttle R-25 engine with a diagram showing the arrangement of liquid oxygen injectors (a) and a cross-sectional view of this injection system (b) [1,5].
- Fig. 4: shows a first example of an installation according to the invention for evaporating liquid oxygen using the energy of the rotating detonation products of a fuel-rich mixture.
- Fig. 5: shows another example of a liquid oxygen vaporization plant utilizing the energy of the rotating detonation products of a fuel-rich mixture with an expanding channel.

### Detailed description of the invention

In the current solution, continuous/continuous spinning detonation is used to raise the temperature of any of the propellant components of the rocket engine to a higher value. The possibilities of using this process in rocket engines are currently being developed in many countries of the world [6-7]. An additional benefit of using the spinning detonation process for this purpose is the possibility of intensifying the process of mixing and evaporation of the liquid cryogenic component, especially oxygen, by shock waves [8-9], which propagate in the exhaust gases produced in the spinning detonation process.

The invention will be presented below in the context of evaporation and/or heating of liquid oxygen. For this purpose, according to the invention, detonation combustion is used in a small preliminary part of the liquid oxygen vaporization system. In this segment, detonation combustion of a small amount of previously evaporated components is carried out (e.g. gaseous hydrogen and gaseous oxygen, or gaseous methane and gaseous oxygen), but with a composition deviating from the stoichiometric composition. Combustion products from this segment, mixing in the further part of the liquid oxygen evaporation system, enable the intensification of the liquid oxygen evaporation process.

In the case of hydrogen-oxygen propellant mixtures, the excess of hydrogen in the detonation pre-chamber should be high enough to lead to afterburning of hydrogen-rich detonation gaseous products in reaction with at least partially vaporized liquid oxygen supplied after the detonation zone (hydrogen-rich mixture) at a temperature above the ignition temperature of hydrogen, i.e. for complete combustion of gaseous hydrogen with evaporating oxygen. As a result of these reactions and the increase in the temperature of the system, the liquid oxygen is completely evaporated.

The supply of liquid oxygen to the channel with the detonation products takes place gradually through a plurality of openings which should be located on one or all sides of the detonation channel. Shock waves generated in the detonation pre-chamber will be an additional element facilitating the process of evaporation and afterburning.

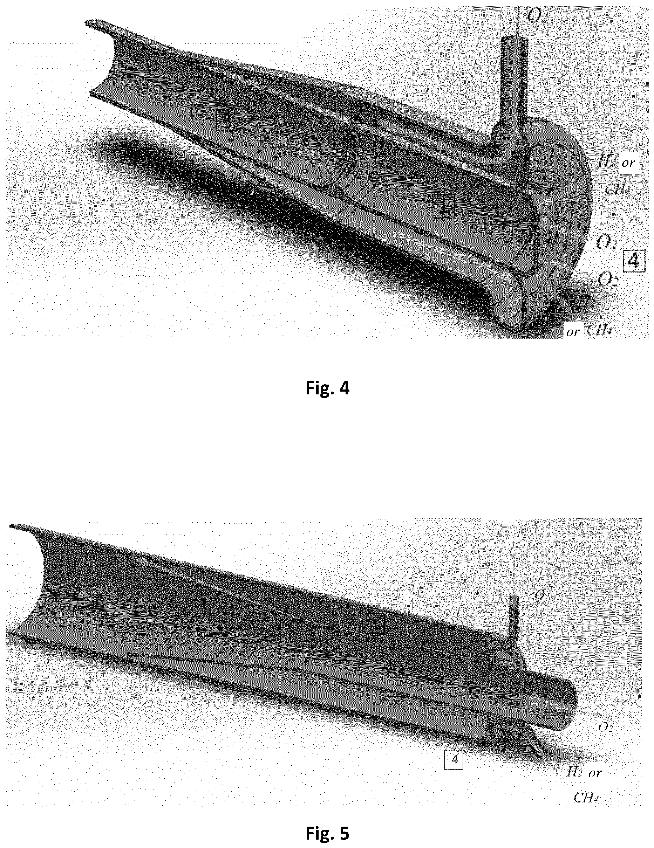

It is also important to select the final temperature of the oxygen evaporation process - as a result of the selection of: the flow rate of the flowing factors as well as the arrangement and size of the holes, so that the temperature of the products of this process is higher than the freezing/condensation or boiling point of the products of this reaction (for example, water vapor formed in from the combustion of hydrogen with oxygen. The diagram of such a device with a channel of constant cross section is shown in the drawing Fig. 4, and with the expanding channel in Fig. 5.

The method and installation according to the invention can also be used to increase the temperature of previously vaporized liquid oxygen or products of incomplete combustion of methane-poor (oxygen-rich) products from the pre-chamber of a rocket engine. Also in this case, the temperature of the products should be above the freezing/condensing or boiling point of the reaction products.

The evaporation process can be carried out in detonation channels of various geometry, i.e. pipes of any cross-section in ring, cylindrical, disc or conical channels.

The process of continuously rotating detonation in a channel with a circular, elliptical, annular, disc or conical cross-section can be used to produce gaseous products of elevated temperature containing a small amount of unburned gaseous fuel at a temperature enabling ignition and its afterburning with liquid oxygen supplied after the detonation chamber or partially evaporated liquid oxygen.

The amount of gaseous fuel in the rotating detonation products is sufficient to generate, during post-combustion with liquid oxygen supplied to the duct in the mixing zone, such an amount of heat that will cause complete evaporation of liquid oxygen and increase the temperature of the products to the value required in the further phases of using this gas stream.

The method of the invention may also be used to raise the temperature of any of the propellant components to a higher temperature by post-combustion of miscible gas/liquid and gas/gas products.

The shock waves generated in the detonation chamber will facilitate mixing and intensify the combustion process in the area of inflow of liquid oxygen or low-temperature gaseous oxygen to the mixing zone.

The installation according to the invention, shown in Fig. 4 and Fig. 5, in a schematic manner, is used to vaporize liquid oxygen using the energy of rotating detonation products enriched in fuel.

In Fig. 4, the cylindrical detonation chamber **1** for combustion of propellant mixtures rich in fuel and poor in oxidant is surrounded concentrically by the liquid oxygen pre-evaporation chamber **2,** which has a common wall with the detonation chamber **1,** which enables the flow of heat from the rotating detonation products to the liquid stream. oxygen. The detonation chamber **1** passes into a mixing zone **3** of the partially vaporized liquid oxygen with the hot products of the rotating detonation, connected to the chamber **2** by a wall with numerous openings. The chamber **2** in the section of the mixing zone takes the form of an inverted truncated cone with the radius of the smaller base equal to the radius of the cylindrical mixing zone. The components of the propellant mixture are supplied by injectors **4** to the detonation combustion chamber **1.** The inlet to the pre-evaporation chamber of liquid oxygen is located in the annular head below the fuel and oxidant injectors **4** to the detonation combustion chamber **1.**

Fig. 5 shows another scheme of the installation according to the invention, where the annular, detonation chamber 1 for combustion of propellant mixtures highly enriched in fuel and poor in oxidant, surrounds a concentric cylindrical chamber **2** of preliminary vaporization of liquid oxygen, having a common wall with the detonation chamber **1,** which enables heat flow from the rotating detonation products to the liquid oxygen stream. The cylindrical liquid oxygen pre-vaporization chamber **2** extends into a mixing zone **3** of the partially vaporized liquid oxygen with the hot rotating detonation products, connecting to the detonation chamber **1** by a wall with numerous openings. The mixing zone **3** has the form of an inverted truncated cone, with the radius of the greater base equal to the radius of the outer wall of the annular detonation chamber **1.** The components of the propellant mixture are supplied by injectors **4** to the detonation combustion chamber **1.**

The installations according to the invention, shown in Figures 4-5, can also be used to raise the temperature of the other component of the propellant, i.e. the fuel, to a higher temperature by using afterburning of the miscible gaseous products of the spinning detonation with liquid components, as well as these gaseous products with gaseous, i.e. completely or partially evaporated, liquid components.

### Literature:

1. Sutton G. P., Biblarz O., Rocket propulsion elements, A Wiley-Interscience Publication JOHN WILEY & SONS, INC. New York / Chichester / Weinheim / Brisbane / Singapore / Toronto (7th ed. 2000);
2. https://en.wil<ipedia.org/wil<i/RS-25
3. https://en.wikipedia.org/wiki/Staged combustion cycle ;
4. Deeken J., Waxenegger-Wilfing G., Oschwald M., Schlechtriem S., LUMEN Demonstrator - Project Overview, 2021, Space Propulsion 2020_375;
5. http://large.stanford.edu/courses/2011/ph240/nguyen1/docs/SSME PRESENT ATION.pdf
6. Wolański P., "Detonative Propulsion", Proceedings of the Combustion Institute, 34, pp.125-158, Elsevier (2013);
7. Wolański P. (Ed.), "Research on detonative propulsion in Poland", Institute of Aviation Scientific Publication No. 60, Warsaw: 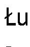 ukasiewicz Research Network - Institute of Aviation, 2021. ISBN 978-83-63539-45-0:
8. Kobiera A., Szymczyk J., Wolański P., Kuhl A.: "A Study of Shock Wave - Hexane Droplets Interaction", ICDERS 2005 CD-ROM Proceedings, (2005);
9. Kobiera A., Szymczyk J., Wolański P., Kuhl A.,: "Studies of shock-induced acceleration of hexane droplets", Shock Waves. 18 (2009), pp.475-485.

## Claims

1. A method of raising the temperature of any propellant component of a rocket engine to a higher temperature, **characterized in that** the stream of a liquid cryogenic component is subjected to initial evaporation and heating by heat received from the products of detonation combustion of the fuel-enriched mixture in the detonation chamber, through its walls, and then downstream of the detonation chamber - in the mixing zone, this partially vaporized stream is introduced gradually and at multiple points to the hot stream of rotating detonation products, obtaining a stream of evaporated and heated cryogenic component to feed the engine combustion chamber.

2. The method according to claim 1, **characterized in that** in the detonation chamber a propellant mixture is combusted, which mixture contains such an excess of fuel that the combustion product stream reaches a temperature enabling ignition and after-combustion downstream of the detonation chamber with the supplied liquid oxygen or partially evaporated liquid oxygen.

3. The method according to claim 1 or 2, **characterized in that** the products of a continuously rotating detonation are obtained in a chamber with a circular, elliptical, annular, disc or conical cross-section.

4. An installation for raising the temperature of any component of the propellant of a rocket engine to a higher temperature, **characterized in that** it consists of a chamber (2) for initial evaporation of a liquid cryogenic component, concentrically combined with a chamber (1) for detonation combustion of mixtures highly enriched in fuel (poor in oxidant ), which has a common wall with the chamber (**1**) enabling the flow of heat from the rotating detonation products to the stream of the liquid component of the propellant mixture, and from the mixing zone (**3**) of the partially evaporated cryogenic component with the hot products of detonation combustion, in which the difference is gradually reduced to zero diameters of both concentric spaces (**1**, **2**), and the wall separating them is perforated.

5. Installation according to claim 4, **characterized in that** the chamber (**1**) for detonation combustion of the fuel-rich mixture is surrounded by a cylindrical chamber (**2**) for pre-evaporation of the liquid oxidant/fuel (hydrogen or methane), which has a decreasing diameter in the mixing zone (**3**), and its outer wall it has the form of a side surface of a truncated cone, with the inlet to the liquid oxidant/fuel pre-vaporization chamber (**2**) located in the annular head below the fuel and oxidant injectors (**4**) to the detonation combustion chamber (**1**).

6. Installation according to claim 4, **characterized in that** the annular chamber (**1**) of detonation combustion of the fuel-rich mixture surrounds the cylindrical chamber (**2**) of liquid oxidant/fuel pre-vaporization, which has a cylindrical inlet of the same diameter as the diameter of said cylindrical chamber (**2**), having in the zone mixing (**3**) the shape of an expanding cup, with a diameter gradually increasing up to the value corresponding to the internal diameter of the outer wall of the detonation combustion chamber (**1**), the fuel and oxygen injectors (**4**) to the detonation combustion chamber (**1**) are located in the base of this annular detonation combustion chamber (**1**).

7. Installation according to claim 4, **characterized in that** the chamber (**1**) for detonation combustion of the fuel-rich mixture is a cylindrical, annular, disc or conical chamber.
